Europäisches Patentamt

European Patent Office

Office européen des brevets

(11) Publication number: **0 330 273**
**A1**

(12) **EUROPEAN PATENT APPLICATION**

(21) Application number: **89200403.7**

(22) Date of filing: **20.02.89**

(51) Int. Cl.⁴: **G01S 13/44**

(30) Priority: **26.02.88 SE 8800683**

(43) Date of publication of application:
**30.08.89 Bulletin 89/35**

(84) Designated Contracting States:
**DE GB IT SE**

(71) Applicant: **Philips Norden AB**
**Tegeluddsvägen 1**
**S-11584 Stockholm(SE)**

㊻ **SE**

Applicant: **N.V. Philips' Gloeilampenfabrieken**
**Groenewoudseweg 1**
**NL-5621 BA Eindhoven(NL)**

㊻ **DE GB IT**

(72) Inventor: **Bergkvist, Bengt Gunnar**
**c/o INT. OCTROOIBUREAU B.V. Prof.**
**Holstlaan 6**
**NL-5656 AA Eindhoven(NL)**

(74) Representative: **De Jongh, Cornelis**
**Dominicus et al**
**INTERNATIONAAL OCTROOIBUREAU B.V.**
**Prof. Holstlaan 6**
**NL-5656 AA Eindhoven(NL)**

(54) **A method and a device in connection with radar.**

(57) The invention relates to a method and a device in connection with radar for measuring the angle position of a target relative to a point of measure. The measuring is carried out by means of a continuously scanning radar operating with monopulse technique. The angle deviation of the target is obtained by comparison of echo signals received on the receiver antenna (3) within a distance interval. The deviation is added (7) to a reference angle position to calculate a reference angle position. A number in the angular direction adjacent reference related angle positions of the target showing a stipulated minimal requirement of the signal energy are weighed together (8, 9).

## A method and a device in connection with radar.

The present invention relates to a method of measuring the angle position of a target relative to a point of measuring by means of a continuously scanning radar, and a device for measuring the angle position of a target.

From the radar literature it is previously known that the measuring of the distance and the angle position of reflectors relative to a point of measuring may be carried out by means of radar technique. It is also known that such a measuring may be carried out by means of a radar system provided with a continuously scanning antenna as well as a system having an antenna directed towards the target.

The measuring of the angle position of targets in a scanning antenna is normally carried out in using knowledge about the input power modulation which is obtained in the receiver of the radar system when the antenna passes the reflector. It is well-known that a high measuring accuracy may be obtained by means of such a principle on condition that the observable input power modulation not is disturbed by modulations of the reflector characteristics during the time of illumination or variations of the target background during the same time.

The measuring of the angle position of targets by means of a fixed antenna may be carried out by different methods, all being based on supply of reflector amplitude from targets in different antenna positions. In the case that only one antenna beam is used, for example, rapid rotation of the same, so called conical scan, may be obtained, in which case the detected reflector amplitude modulation by mean of correlation with an instantaneous antenna position may be used for the determining of the target position in two dimensions. Another well-known prinicipal is to use an antenna construction which simultaneously contains two or more beams, so called monopulse technique. By comparing the reflected signal energy in the different beams by mean of different methods a measure of the angle position of the target relative to the antenna core line may be obtained.

One limiting factor for the angle measuring precision is that many target types in question show a physical extension in angular direction (angular way). When this is observed by means of radar radiation having a narrow band, a centre of gravity is obtained by interferences from different parts of the target which like speckles goes across the target. Within the radar technique this phenomenon is called glitter (or glint) and is well-known and described in the radar literature.

A known method of reducing the angle inaccuracy obtained due to glittering effects when measuring with radar is to use more than one radar frequency for successive measurings and thereafter weigh together the different measurements. By means of this method a reduction of the fault caused by glittering under certain circumstances has been reported with a factor up to 10 in the literature when using a monopulse radar.

For continuously scanning radar stations no methods are described inthe literature to obtain corresponding gains. Normally this type of antennas only uses a simple forking technique for angle measurement, that is antenna positions where the observed reflected signal energy exceeds a fixed threshold value is noted and the reflector position is assigned as the centre point of this area. By means of such a method, essentially the signals obtained at the flanks of the radar antenna is used, which for normal radar stations constitute a small part of the available measuring pulses.

In this connection it is also to be noted that, per se, it is even known to provide the reconnaissance radar systems with a monopulse arrangement. Such technique is well established within the SSR field and the technique has also been implemented for reconnaissance stations. The monopulse technique is in this case used during reconnaissance only in order to improve the radar echo presentation by use of a so called beam sharpening, i e the technique in which signals in the summated beam of the monopulse antenna are subtracted from weighed rectified signals from the difference beam, so that a more narrow indication in the angular direction may be obtained and in special cases even an improved resolution in the angular direction.

According to the present invention monopulse technique is used in order to improve the angle measuring accuracy by the following arrangement:

The radar antenna is provided with a monopulse measuring means having capacity of angle evaluation within a region around the core line of the antenna. Such means may for example consist of an antenna having two simultaneously generated beams, the beams being inclined relative to each other. In high frequency respect the signals from the beams are treated in such a way that high frequency sum and difference signals are obtained. These signals are then amplified in a phase correct way and are possibly transposed to a suitable intermediant frequency where the difference signal is divided with the sum signal. Hereby an output signal is obtained, the amplitude of which is a measure of the reflector deviation from the antenna core line and its sign a measure of the direction of the deviation. The measuring value obtained in such a way may be linearized by means of measured antenna and signal processing characteristics which-are stored in the equipment. Then a measuring value is obtained for each pulse which in angle measure indicates the deflection of the reflector from the antenna core line at the measuring moment. The obtained measuring values are added in a suitable way to the angle position of the antenna in question. From this follows that the value obtained in this way will exhibit a high degree of constancy when passing a reflector the power of which is sufficiently great to obtain a good operation of the discriminator. The measuring values obtained in this way are correlated with the signal energy simultaneously received in the summated beam, for example, in such a way that only angle measuring values are stored for which the measured signal energy exceeds a given value.

By means of an arrangement of the proposed kind the following characteristics may be obtained:

a. By averaging the values selected in such a way an improved angle estimate of the reflector position may be obtained.

b. By studying the dispersion of the obtained measuring values a measure of the reflector structure may further be obtained in the observed distance cell. If, for example, the reflector consists of two reflectors on an angle distance less than the beam width, two concentrations of points of measuring may be observed on certain conditions, whereby the appearance of a double reflector may be confirmed. In other cases the signal character of the angle values may be utilized to classify the reflector, for example, belonging to the class of multi-reflector targets (chaff).

c. By using jumping frequency the glittering of reflectors may be strongly suppressed by means of the method according to the above in the same way that may take place by means of a monopulse antenna which is continuously directed on the measuring object.

d. By means of the method, measuring values failed to come, to a limited extension will influence the measuring position regardless of where relative to beam centre these disturbances occur.

e. By means of the methods according to the above the measuring procession will be rendered independent of the distance between successive measurements, with the consequence that, for example, a strongly varying pulse repetition frequency does not influence the measuring accuracy.

f. By the effect according to the above the method is well suitable for use together with so called "batch"-processing implying that several successive measurements are co-filtrated before the detection. This method which is often used especially within the doppler technique, gives rise to a few independent measurements within the illumination time and often, due to the variation of the signal treatment between successive pulse bursts to disturbing modulations in view of angle measurements. By using one angle measurements per batch and co-store these after determination of the measurements, a significantly improved angle improved angle measurement accuracy may be obtained.

The method applied for a patent is thus characterized in that monopulse technique is used during the radar scanning for determining a measure of the angle deviation of the target from the core line of the receiver antenna by comparing echo signals received within a distance interval, that the measure of the angle position of the target is added to an antenna angle in question for the obtaining of a reference related angle position for the target, and that a number of in angle direction adjacent reference related angle positions of the target showing a stipulated minimum requirement on the signal energy are co-weighed.

A device for measuring the angle position of a target in relation to a measuring point by means of a continuously scanning radar comprising inter alia a transmitter antenna, a receiver antenna, a monopulse transmitter, a monopulse reciever, and equipment for determining of the angle position of a target is characterized in that the equipment for determining the angle position of a target comprises means for determining the angle deviation from the core line of the receiver antenna for received echo signals by comparison, means for adding the angle deviation to a reference angle position, means for separating reference related angle positions showing a stipulated minimal requirement on the signal energy, and means for co-weighing a number of adjacent reference related angle positions in the angular direction fulfilling the minimal requirement.

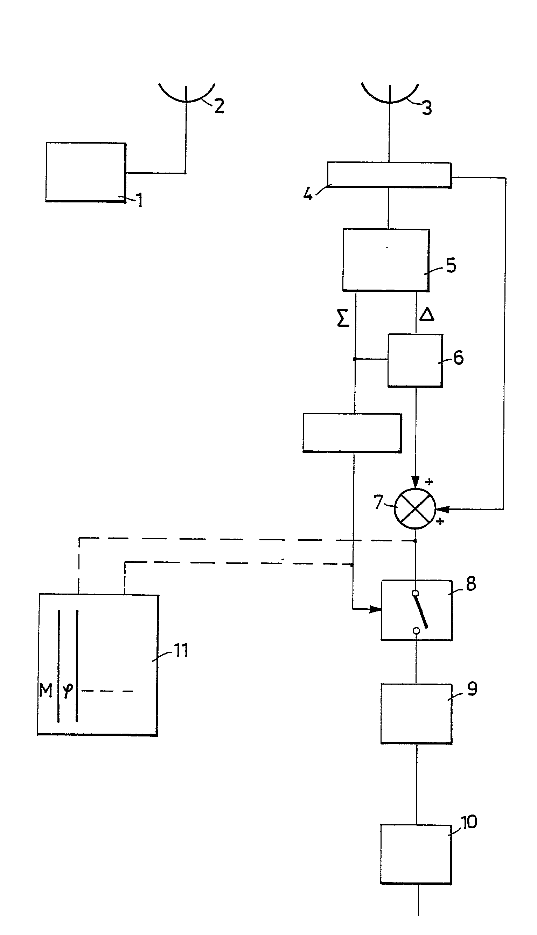

The invention will be described below by way of example with reference to the accompanying drawing in which a schematical block diagram for a radar comprising a device according to the invention for measuring the angle position of a target is shown.

The radar shown in the figure comprises a monopulse transmitter 1 coupled to a transmitter antenna. On the receiver end there is present a receiver 3 arranged on a rotatable scanning device 4. The transmitter antenna and the receiver antenna are here shown as two separate antennas, but they equally well may consist of one combined transmitter/receiver antenna. The echo signal received by the reciever antenna 3 is conveyed to a monopulse receiver 5 having signal processing means. The monopulse receiver supplies a sum signal $\Sigma$ and a difference signal $\Delta$. These signals are applied to a comparison means 6. The comparison means calculates the angle deviation from the core line of the receiver antenna for received echo signals. A measure of the deviation may be obtained by calculating the ratio of the sum and difference signals applied to the comparison means. The calculated angle deviation is added in an adder 7 to a reference angle position obtained from the scanning device 4. At the output of the adder 7 a reference related angel position is obtained which is allowed to pass means for separating reference related angle positions 8. The signal energy of the sum signal determines if a reference related angle position fulfills prescribed minimal requirements. Reference related angle positions fulfilling the prescribed minimal requirement of the signal energy are weighed together in angular direction in a mean value calculator 9.

A scattering calculator 10 calculates the scattering of a number of adjacent reference related angle positions in the angular direction to classify the type of target. As indicated a memory 11 may be arranged for storing the calculated reference related angle position fulfilling the minimal required amount together with the corresponding signal energy. The connection of the memory 11 has been indicated by means of broken lines.

**Claims**

1. A method of measuring of the angle position of a target relative to the point of measuring by means of a continuously scanning radar, **characterized** in that the monopulse technique is used during the radar scanning for determining a measure of the angle deviation of the target from the core line of the receiver antenna by comparing echo signals received on the receiver antenna within a distance interval, that the measure of the angle position of the target is added to an antenna angle in question for the obtaining of a reference related angle position for the target, and that a number of adjacent reference related angle positions of the target in the angular direction showing a stipulated minimal requirement on the signal energy are weighed together.

2. A method as claimed in claim 1, **characterized** in that the weighing together of a number of adjacent reference related angle positions in the angular direction is carried out as a mean value calculation of said adjacent angle positions.

3. A method as claimed in any of the preceding claims, **characterized** in that the comparison of the echo signals received on the receiver antenna is carried out in that a sum signal as well as a difference signal are calculated within a distance interval for two receiver beams belonging to the receiver antenna and to determine the ratio between these two signals, the amplitude ratio being a measure of the angle deviation of the target from the core line of the receiver antenna and the sign of the ratio being a measure of the direction of the angle deviation.

4. A method as claimed in any of the preceding claims, **characterized** in that the frequency of the radar is changed during the radar scanning.

5. A method as claimed in claim 4, **characterized** in that the, per se, known jumping frequency technique is used to change the frequency of the radar.

6. A method as claimed in any of the preceding claims, **characterized** in that the scattering of a number of in angular direction adjacent reference related angular positions is calculated for classifying of the type of target.

7. A device for measuring the angle position of a target relative to a point of measuring by means of a continuously scanning radar comprising inter alia a transmitter antenna, a receiver antenna, a monopulse transmitter, a monopulse receiver, and equipment for determining the angle position of a target, **characterized** in that the equipment for determining the angle position of a target comprises means for determining the angle deviation from the core line of the receiver antenna for the received echo signals by comparison, means for adding the angle deviation to a reference angle position, means for separating reference related angle positions showing a stipulated minimal requirement on the signal energy, and means for weighing together a number of adjacent reference related angle positions in the angular direction fulfilling the minimal requirement.

8. A device as claimed in claim 7, **characterized** in that a memory is arranged to store reference related angle positions and corresponding signal energy for reference related angle positions fulfilling the stipulated minimal requirement.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | PATENT ABSTRACTS OF JAPAN, vol. 5, no. 81 (P-63)[753]; & JP-A-56 26 274 (MITSUBISHI DENKI K.K.) 13-03-1981 * Abstract * | 1-3,7 | G 01 S 13/44 |
| X | PATENT ABSTRACTS OF JAPAN, no. (E-78)[1851], page 1851 E 78; & JP-A-53 26 596 (TOKYO SHIBAURA DENKI K.K.) 03-11-1978 * Abstract * | 1-3,7 | |
| A | DE-C- 978 047 (SIEMENS) * Whole document * | 1,7 | |
| A | DE-A-3 314 220 (LICENTIA) * Whole document * | 1,2,7 | |
| A | FR-A-2 509 475 (LCT) * Page 10, line 9 - page 11, line 29; page 12, claim 1; figures 1-6 * | 1,6,7 | |
| A | EP-A-0 026 134 (THOMSON-CSF) * Abstract; figure 1-b * | 1,2,7 | TECHNICAL FIELDS SEARCHED (Int. Cl.4) G 01 S |
| A | US-A-3 992 710 (T.L. GABRIELLE et al.) * Abstract; figure 2 * | 6 | |
| A | CONFERENCE PROCEEDINGS MILITARY MICROWAVES '86, Brighton, 24th-26th June 1986, pages 75-81, Microwave Exhibitions and Publishers Ltd, Tunbridge Wells, Kent, GB; E. GIACCARI et al.: "Rat 31-SL: A multiple beam radar for 3D long range detection" * Page 75, abstract; page 80, paragraph 5; figure 5 * | 4,5 | |

The present search report has been drawn up for all claims

| Place of search | Date of completion of the search | Examiner |
|---|---|---|
| THE HAGUE | 29-05-1989 | VAN WEEL E.J.G. |